Europäisches Patentamt

(19) **European Patent Office**

Office européen des brevets

(11) Publication number: **0 101 135** `

**B1**

(12) **EUROPEAN PATENT SPECIFICATION**

(45) Date of publication of patent specification: **03.12.86**

(51) Int. Cl.⁴: **A 23 F 5/20**

(21) Application number: **83201175.3**

(22) Date of filing: **08.08.83**

(54) **A process for decaffeinating green coffee.**

(30) Priority: **09.08.82 NL 8203139**

(43) Date of publication of application:
**22.02.84 Bulletin 84/08**

(45) Publication of the grant of the patent:
**03.12.86 Bulletin 86/49**

(84) Designated Contracting States:
**AT BE CH DE FR GB IT LI LU**

(56) References cited:
**DE-A-2 737 794**
**DE-C- 597 001**
**FR-A- 733 915**
**FR-A-2 292 433**
**FR-A-2 389 333**
**GB-A- 366 305**
**GB-A-1 527 667**

(73) Proprietor: **Douwe Egberts Koninklijke Tabaksfabriek- Koffiebranderijen-Theehandel N.V.**
**Keulsekade 143**
**NL-3532 AA Utrecht (NL)**

(72) Inventor: **van der Stegen, Gerrit Hubert Dirk**
**Lodewijkstraat 53**
**NL-3417 VD Montfort (NL)**

(74) Representative: **Urbanus, Henricus Maria, Ir. et al**
**c/o Vereenigde Octrooibureaux Nieuwe Parklaan 107**
**NL-2587 BP 's-Gravenhage (NL)**

Courier Press, Leamington Spa, England.

## Description

The decaffeination of green coffee is normally carried out by first treating the beans with water and/or water vapour at elevated temperature (a preliminary treatment to render the caffeine extractable) and then extracting them with a chlorinated hydrocarbon. It is clear that, for reasons of health, it is desirable to remove these substances after this treatment very carefully. For this purpose the extracted beans are subjected to a prolonged treatment with steam. Furthermore it will be clear that the use of steam for the preliminary treatment and especially the prolonged after-treatment with steam has an adverse effect on the quality of the product.

According to US patent 2,309,092, the beans are not subjected to direct contact with the chlorinated extraction agent. The beans are first extracted with warm water, whereafter the resulting solution is treated with the chlorinated extraction agent, during which treatment the caffeine passes into the extraction agent. The decaffeinated solution is used for the extraction of a fresh quantity of beans, whereby it is accomplished that the non-caffeine components are not extracted from this fresh quantity of beans along with the caffeine, or to a slight extent only. In fact, the non-caffeine components of the previous batch are still present in the solution, so that, as far as these components is concerned, there is an equilibrium (or substantial equilibrium) between the solution and the beans. However, the decaffeinated extract must yet be liberated from the residues of the chlorinated extraction agent, because otherwise this could again be transferred to the beans. In this case, too, this is effected by a steam treatment (stripping). As the aqueous solution contains important flavours (and this aqueous solution is continuously recycled) it cannot be prevented that, here again, a deterioration in quality results.

The disadvantages just referred to are avoided according to US patent 3,879,569, by extracting the caffeine from the beans by means of carbon dioxide under high pressure. This, however, is a technologically complex and expensive process, so that there has been a search for organic solvents which are less disadvantageous than the chlorinated hydrocarbons referred to.

In the manufacture of so-called "mild coffee" (that is to say, coffee without certain components irritant to the gastro-intestinal system) we have used the principle of using for the extraction of the green beans solvents which naturally occur in roasted coffee in not unduly small quantities. It was found that methyl ethyl ketone and methyl acetate gave good results (see British patent 1,527,667). Relatively short processing periods with steam were sufficient to reduce the quantity of residues of solvent remaining behind in the beans to such an extent that, after roasting, the coffee contained a normal proportion of these solvents.

As stated before, during the decaffeination process, water of relatively high temperature is used in the preliminary treatment, in the extraction, and in the after-treatment (stripping with steam). It is of paramount importance in this connection that the duration of the treatment should be as short as possible. Various organic solvents have been used.

US patent 4,207,352 (corresponding to German Auslegeschrift 27.20.203) describes a batch-wise decaffeination process, which requires long processing periods. It says in the patent that a combination of ketones and esters is required to prevent all sorts of adverse effects which occur when these substances are used separately (off-taste and off-colour). These adverse effects are described in detail in German Auslegeschrift 27.20.203 (see column 1, lines 31—65).

It is an object of the present invention to provide a process in which all of these adverse effects are fully prevented, and the overall coffee processing period is greatly shortened.

The invention provides a process for the decaffeination of green coffee, in which coffee beans, whole or reduced to particles, are extracted in a series of extraction steps with an aqueous organic solvent in which caffeine from the coffee is preferentially soluble, by

— selecting as the organic solvent methyl ethyl ketone or methyl acetate,

— the extraction temperature being approximately equal to the boiling temperature of the solvent,

— the extraction being effected in continuous or semi-continuous countercurrency in at least three extraction sections,

— the coffee being supplied to the first extraction section with approximately its natural water content,

— the organic solvent being supplied to the last extraction section with a water content of 5—10% by volume, and

— water being added to the first extraction section in at most such a quantity that just no segregation occurs, and the solvent enriched with caffeine, ultimately withdrawn from the first section, contains 5—10% by volume of water.

The percentage of caffeine to which the coffee must be decaffeinated depends on the relevant legislation in the country in which the coffee is to be sold after roasting, and is generally less than 0.1%.

In a countercurrent extraction, as contemplated according to the present invention, use can be made of an extraction battery or of a conveyor belt. In an extraction battery, consisting of a plurality of series-connected extraction units, the extraction unit containing the fully extracted coffee is continually taken off-stream and emptied, while at the other end a unit with fresh coffee is taken on-stream. The stream of extraction liquid may be a continuous stream, but it is also possible for the solvent to be allowed to stand in the units for some time (with or without being circulated). Accordingly, in a battery extraction process the coffee-stream is always semi-continuous, while the stream of extraction liquid may be either continuous or semi-continuous.

When a conveyor belt is used, the coffee is supplied on such a belt in a layer, preferably one of uniform thickness. The system is divided into sections, and in each section solvent is circulated transversely to the direction of travel of the belt (see Australian patent 402,144).

The invention is illustrated in and by the following example.

### Example

For this experiment a small-scale conveyor belt extractor with six extraction sections was used.

Brazilian green coffee was deposited on the conveyor belt of the extractor at a rate of 14 kg/hour. The residence time of the coffee on the belt was 9 hours. Fresh extraction agent was supplied countercurrently (to the last extraction section) at a rate of 38.5 kg methyl ethyl ketone plus 4.2 kg water (8% by volume) per hour. In all six extraction sections the extract was continuously circulated over the coffee on the corresponding portion of the belt. In the first extraction section, where the crude coffee entered, 2.45 kg water per hour was supplied to the circulating extract.

The extraction was carried out at a temperature of 70°C. From the first extraction section, extract was withdrawn at a rate of approximately 33 kg per hour. This extract contained 7.5% by volume of water. The dry content of this extract consisted as to 45% of caffeine. The product coffee from the last extraction section contained approximately 50% (on the overall weight basis) or volatile material (water plus methyl ethyl ketone) and 0.5 g caffeine per kg of solids. The extracted coffee was steamed for 2 hours at atmospheric pressure to remove methyl ethyl ketone, and subsequently dried to the ordinary moisture content. The dried decaffeinated coffee still contained approximately 6 ppm of methyl ethyl ketone. Samples of the decaffeinated coffee had, after roasting, a milder taste and were preferred by professional tasters to untreated reference coffee.

### Claims

1. A process for the decaffeination of green coffee, in which coffee beans, whole or reduced to particles, are extracted in a series of extraction steps with an aqueous organic solvent in which caffeine from the coffee is preferentially soluble, by
— selecting as the organic solvent methyl ethyl ketone or methyl acetate,
— the extraction temperature being approximately equal to the boiling temperature of the solvent,
— the extraction being effected in continuous or semi-continuous countercurrency in at least three extraction sections,
— the coffee being supplied to the first extraction section with approximately its natural water content,
— the organic solvent being supplied to the last extraction section with a water content of 5—10% by volume, and
— water being added to the first extraction section in at most such a quantity that just no segregation occurs, and the solvent enriched with caffeine, ultimately withdrawn from the first section, contains 5—10% by volume of water.

2. A process according to claim 1, characterised in that the coffee is extracted to a caffeine content of less than 0.1%, calculated on its dry content.

### Patentansprüche

1. Verfahren zur Entkoffeinierung von Rohkaffee, bei dem Kaffeebohnen im Ganzen oder in Partikel zerlegt in einer Reihe von Extraktionsschritten mit einem wäßrigen organischen Lösungsmittel, in welchem Kaffee-Coffein vorzugsweise lösbar ist, extrahiert werden, wobei
— al organisches Lösungsmittel Methyl-Ethyl-Keton oder Methylacetat benutzt wird,
— die Extraktionstemperatur etwa der Siedetemperatur des Lösungsmittels gleich ist,
— die Extraktion kontinuierlich oder halbkontinuierlich im Gegenstrom in wenigstens drei Extraktionsabschnitten durchgeführt wird,
— der Kaffee dem ersten Extraktionsabschnitt mit seinem etwa natürlichen Wassergehalt zugegeben wird,
— das organische Lösungsmittel dem letzten Extraktionsabschnitt mit einem Wassergehalt von 5 bis 10 Volumenprozent zugegeben wird und
— Wasser dem ersten Extraktionsabschnitt in höchstens einer derartigen Menge zugegeben wird, daß gerade keine Absonderung eintritt, und das mit Coffein angereicherte Lösungsmittel, welches schließlich vom ersten Abschnitt abgezogen wird, 5 bis 10 Volumenprozent Wasser enthält.

2. Verfahren nach Anspruch 1, dadurch gekennzeichnet, daß der Kaffee auf einen Coffeingehalt von weniger als 0,1%, berechnet auf seinen Trockengehalt, extrahiert wird.

### Revendications

1. Un procédé pour décaféiner du café vert, dans lequel les grains de café, entiers ou réduits en particules, sont soumis à une extraction dans une série d'étapes d'extraction avec un solvant organique aqueux dans lequel la caféine du café se dissout préférentiellement, procédé qui présente les caractéristiques suivantes:
— on prend comme solvant organique de la méthyléthylcétone ou de l'acétate de méthyle,
— la température à laquelle se fait l'extraction est à peu près la température d'ébullition du solvant,
— l'extraction se fait à contre-courant en continu ou en semi-continu dans trois étapes d'extraction au moins,

— le café arrive à la première étape d'extraction sensiblement à sa teneur naturelle en eau,

— le solvant organique arrive à la dernière étape d'extraction à une teneur en eau de 5 à 10 % en volume, et

— on ajoute de l'eau à la première étape d'extraction en une proportion juste suffisante pour qu'il n'y ait pas de séparation, et le solvant enrichi en caféine qui est finalement retiré de la première étape contient 5 à 10 % en volume d'eau.

2. Un procédé selon la revendication 1 caractérisé en ce que l'on extrait le café jusqu'à une teneur en caféine inférieure à 0,1 %, par rapport à sa teneur en matière sèches.